# FASCICULE DE BREVET EUROPEEN

(11) **EP 0 805 900 B1**
(45) Date de publication et mention de la délivrance du brevet: **11.08.1999**
(21) Numéro de dépôt: 96901014.9
(22) Date de dépôt: 03.01.1996
(51) Int. Cl.: E01C 19/10, C08L 95/00, C04B 26/26, B01F 3/14, E01C 7/35

(54) **PROCEDE D'ENROBAGE DE SUPPORTS, ENROBE OBTENU PAR CE PROCEDE, DISPOSITIF DE PRODUCTION ET DE POSE D'ENROBES**
VERFAHREN ZUR BESCHICHTUNG VON MATERIALIEN, MIT DIESEM VERFAHREN HERGESTELLTE BESCHICHTETE MATERIALIEN, VORRICHTUNG ZUM HERSTELLEN UND EINBAUEN VON BESCHICHTETEN MATERIALIEN
METHOD FOR COATING MATERIALS, RESULTING COATED MATERIALS, DEVICE FOR PRODUCING AND LAYING COATED MATERIALS

(30) Priorité: 03.01.1995 FR 9500079; 29.03.1995 FR 9503918
(43) Date de publication de la demande: 12.11.1997
(73) Titulaire: Muntzer, Emile Jacques, F-67000 Strasbourg (FR); Muntzer, Paul Dr., F-67000 Strasbourg (FR); Muntzer, Jean, F-67300 Schiltigheim (FR); Muntzer, Isabelle, F-75011 Paris (FR)
(72) Inventeur: Muntzer, Emile Jacques, F-67000 Strasbourg (FR); Muntzer, Paul Dr., F-67000 Strasbourg (FR); Muntzer, Jean, F-67300 Schiltigheim (FR); Muntzer, Isabelle, F-75011 Paris (FR)
(74) Mandataire: Nuss, Laurent
(86) Numéro de dépôt international: FR9600010
(87) Numéro de publication internationale: WO9621686

(56) Documents cités:
- EP-A- 0 275 461
- EP-A- 0 402 292
- EP-A- 0 555 167
- DE-A- 1 594 815
- DE-A- 3 018 419
- FR-A- 810 494
- FR-A- 867 054
- FR-A- 1 595 858
- GB-A- 996 274
- GB-A- 1 340 762
- US-A- 3 418 900

## Description

La présente invention concerne le domaine de l'enrobage et des émulsions, notamment des émulsions bitumineuses, des enrobés obtenus par application de ces émulsions, ainsi que des dispositifs de production et de pose d'enrobés bitumineux.

Elle a plus particulièrement pour objet un procédé d'enrobage, de supports quelconques, ainsi que des dispositifs ou des installations de production et de pose de tels enrobés.

Le problème de l'enrobage et du recouvrement de supports non prétraités et souvent humides se pose en particulier en relation avec les émulsions de bitume qui doivent enrober adhésivement les compositions granulaires et filléreuses, prises en l'état du jour, sur leurs dépôts à ciel ouvert.

Il est un fait que les matériaux humides n'acceptent pas, dans cet état, l'enrobage par les hydrocarbures. L'eau étant en effet le premier occupant, il fallait jusqu'à présent soit assécher les matériaux, soit déplacer chimiquement l'eau présente.

Une première solution satisfaisante à ces problèmes a été proposée par les demandes de brevet français n° 2686811 et européen n° 0555167, valable à la fois pour l'enrobage à chaud et pour l'enrobage à froid.

Le procédé décrit dans ces dépôts propose de rendre hydrophobes les supports à enrober, par un prétraitement mis en oeuvre à froid, en faisant réagir, en contact avec ces supports, deux vecteurs hydrophobants, à savoir un sel métallique et un acide gras ou des produits similaires. Lorsque ces derniers sont mélangés avec des supports secs ou peu humides, l'hydrophobie apparaît spontanément, sans séchage. Mouillés à plus de 1 % d'eau, les matériaux supports notablement filléreux doivent être séchés après avoir ajouté et mélangé les vecteurs hydrophobants, ce qui est également le cas pour les matériaux à granulométrie ouverte. Ce séchage peut être opéré à froid, donc sans l'intervention d'un tambour sécheur.

Les granulats minéraux ainsi prétraités sont adhésivement enrobables par tout liant bitumineux, quelle que soit sa forme.

Toutefois, ce procédé nécessite de prétraiter toute la masse des granulats susceptibles d'être enrobés, ce qui le rend onéreux, peu flexible et peu adaptatif.

Par les documents DE-A- 1 594 815 et EP-A- 0 402 292, on connaît des procédés d'enrobage bitumineux dans lesquels la phase d'enrobage proprement dite, réalisée dans des conditions et avec des ingrédients spécifiques, est précédée ou accompagnée d'une phase de traitement chimique complexe et délicate de l'émulsion ou du mélange émulsion/granulats.

Ces traitements chimiques nécessitent des moyens importants, sont d'une mise en oeuvre délicates en terme de contrôle et d'adaptation et ne peuvent être effectués que sur des sites spécialisés, généralement très éloignés des chantiers utilisant ces enrobés.

En outre, le pouvoir d'enrobage des émulsions mises en oeuvre ou produites dans le cadre de ces procédés connus est limité.

Par ailleurs, il est connu par le document EP-A- 0 275 461 un procédé et un dispositif de production et de pose d'enrobés à froid, ledit dispositif étant de structure complexe et spécifique, ne permettant que la production d'enrobés froids.

La présente invention a notamment pour but de pallier les différents inconvénients précités et de fournir, d'une part, un procédé souple et adaptatif d'enrobage bitumineux de supports quelconques sécurisant l'enrobage à froid et faisant état d'une capacité d'enrobage et de recouvrement universelle et polyvalente, indifféremment du type de supports à enrober et, d'autre part, un dispositif pour réaliser ce procédé d'enrobage, permettant d'utiliser au maximum les éléments des installations et les matériels d'enrobage à chaud classiques, tout en supprimant certains des dispositifs actuels de ces dernières et en rendant les dispositifs conservés plus polyvalents, ce tout en limitant leur consommation énergique.

A cet effet, la présente invention a pour premier objet un procédé d'enrobage tel que décrit dans la revendication 1, ainsi qu'un enrobé bitumineux obtenu par ce procédé.

L'invention a également pour objet un dispositif de production et de pose d'enrobés bitumineux pour la mise en oeuvre du procédé précité, tel que décrit dans la revendication 14.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:
la figure 1 est une représentation schématique d'une installation de production d'enrobés à chaud classique faisant partie de l'état de la technique;
la figure 2 est une représentation schématique d'un dispositif de production et de pose d'enrobés à froid selon l'invention;
la figure 3 est une représentation schématique d'un dispositif de production et de pose d'enrobés à froid et à chaud selon l'invention;
la figure 3A est une représentation schématique d'une variante de réalisation du dispositif représenté à la figure 3;
la figure 4 est une présentation schématique d'un dispositif de production et de pose d'enrobés à froid et à chaud selon un autre mode de réalisation de l'invention, et,
la figure 5 est une représentation schématique d'un moyen de transport pourvu d'une unité de déversement selon l'invention.

Conformément à l'invention, le procédé d'enrobage de supports quelconques, consiste à réaliser un enrobage à froid des supports avec une rupture adhésive, complète ou non, obtenue dans les malaxeurs ou analogues, puis à réchauffer les enrobés obtenus, par exemple dans un réchauffeur, à une température suffisante permettant leur transport et leur pose à environ 100°C, sans chercher à évaporer l'eau.

Selon l'invention, il est prévu d'obtenir préalablement une poudre finement divisée hydrophobe et de charge électrique positive, par l'action concomitante d'un sel métallique soluble dans l'eau et d'un acide organique à chaîne longue, puis à introduire cette poudre, soit dans la masse des supports, notamment granulats, à enrober, soit dans l'émulsion anionique bitumineuse et, ensuite, à mélanger les granulats et l'émulsion bitumineuse dans un malaxeur ou analogue en vue de réaliser l'enrobage à froid.

Du fait des techniques d'hydrophobation, l'eau de rupture ou d'apport par les granulats n'a plus besoin d'être évaporée et peut être utilisée, avec le bitume ayant lié les fines, pour supprimer la ségrégation ainsi que les pollutions de la poussière et des vapeurs de distillation du bitume, souvent surchauffé en enrobage à chaud classique.

De manière plus précise, il peut être prévu selon un mode de réalisation de l'invention, de mélanger une émulsion anionique avec une poudre minérale ou organique hydrophobée de charge électrique positive et très finement divisée, de manière à conférer à ladite émulsion un comportement cationique et des propriétés d'enrobage et de recouvrement universelles.

Conformément à une variante de réalisation de l'invention, applicable au cas d'un enrobage à l'aide d'émulsions anioniques surstabilisés, la rupture, l'adhésion et le recouvrement sont réglés, de manière modulable, par un mélange de poudre hydrophobée et d'un vecteur de rupture, ce mélange pouvant être joint à l'enrobé au moment de sa pose, soit sous forme de suspension aqueuse, notamment colloïdale, soit sous forme de poudre solide, composée du mélange de la poudre hydrophobée et du vecteur de rupture sous forme de son sel.

De manière avantageuse, le milieu alcalin de l'émulsion est porté à un niveau stabilisant tel que la poudre hydrophobée, dosée de manière juste suffisante, ne parvienne pas à déclencher une rupture sensible de ladite émulsion, et une substance entraînant la rupture de l'émulsion est adjoint à l'enrobé au moment de la pose de ce dernier, ladite rupture pouvant intervenir, par exemple, par précipitation de l'émulsifiant anionique par le sulfate de magnésium ou une substance analogue.

Dans le cadre de la présente invention, il peut également être procédé à la préparation d'une émulsion, permettant de réaliser l'enrobage à froid de supports quelconques, cette émulsion pouvant notamment servir pour l'enrobage à froid mentionné précédemment dans le cadre du procédé d'enrobage précité.

La préparation d'une telle émulsion, présentant des propriétés d'enrobage et de recouvrement amélioré, consiste essentiellement à introduire dans une émulsion anionique finie ou en cours de fabrication au moins une poudre minérale ou organique hydrophobée de charge électrique positive et très finement divisée, en quantité au moins suffisante pour conférer à ladite émulsion un comportement cationique et des propriétés d'enrobage polyvalentes.

De manière avantageuse, l'hydrophobicité et la charge électrique positive des grains de la poudre sont obtenues, préalablement à son introduction dans l'émulsion, par l'action concomitante d'un sel métallique et d'un acide organique à chaîne longue.

Selon un mode de réalisation préférentiel, le sel métallique peut consister en un sel ferreux ou en un sel acide métallique, en solution aqueuse, l'acide organique pouvant consister en un acide gras.

Les détails techniques d'obtention de ce type d'hydrophobicité sont décrits de manière plus précise dans les dépôts français et européen précités.

Les poudres minérales et organiques utilisées sont préférentiellement d'une finesse de mouture très poussée, comme par exemple les argiles telles que la bentonite, le talc ou analogue ou des poudres comme le carbonate de calcium, vendu sous la dénomination de blanc d'Espagne, ou similaire.

Malgré leur finesse, qui peut être colloïdale, ces poudres peuvent être hydrophobées sans opération de séchage particulière.

Avantageusement, le diamètre moyen des grains de la poudre hydrophobée est au moins environ 10 fois inférieur à celui des globules en suspension dans l'émulsion.

En vue de permettre dans tous les cas l'introduction des poudres hydrophobées précitées dans les émulsions à transformer, chaque émulsion considérée se présente initialement sous la forme d'une émulsion anionique stabilisée au moyen d'un ou de plusieurs alcalis, l'émulsion finale obtenue, après intégration de la poudre hydrophobée chargée positivement, ayant toutes les réactions d'une émulsion cationique ou à effet cationique, restant opérationnelle et stable en milieu fortement alcalin, et conservant ses propriétés d'enrobage polyvalentes.

En effet, les poudres hydrophobées, porteuses de charges électriques positives et introduites dans les émulsions, développent un potentiel d'attraction vis-à-vis des globules de l'émulsion, chargées négativement.

Cette attraction mutuelle, en vue du but principal de l'invention, devra se traduire par un excès de charges électriques positives pour le milieu, apportées par la ou les poudres hydrophobées, pour qu'un effet de rupture polyvalente à effet cationique soit possible.

Afin de tenter d'expliquer le processus physico-chimique qui a lieu, les inventeurs proposent trois hypothèses :
1) les grains de poudre sont adsorbés par les globules de bitume ou autre en suspension, dont ils effacent les charges négatives en formant une ceinture de grains, chargée d'électricité positive,
2) les globules de bitume ou autre sont attirés et déchargés par les grains de la poudre hydrophobée et se groupent autour d'eux en ceinture chargée positivement;
3) les grains de poudre hydrophobés, du fait qu'ils refusent l'eau, sont répartis mécaniquement et uniformément dans l'émulsion et ne deviennent actifs qu'au contact avec les supports, tels que les granulats, destinés à être enrobés. Amenés en contact des supports ou des granulats acides, ils déclenchent une réaction d'ordre cationique et l'enrobage ou le recouvrement adhésif est obtenu. Amenés au contact avec des supports ou des granulats basiques l'émulsion continue de fonctionner comme une émulsion anionique qui porte une charge électrique opposée à celle des granulats ou autres supports basiques et les conditions d'un enrobage ou d'un recouvrement adhésif sont également remplies. Dans ce dernier cas, la présence de la poudre hydrophobée ne peut avoir qu'un effet sur la rupture.

Dans tous les trois cas précités, les conditions en vue d'un enrobage et d'un recouvrement corrects et utilisables sont favorables.

Il a été constaté que les conditions de réussite, en vue de transformer une émulsion anionique en émulsion à effet universel, notamment cationique, à l'aide de poudres ou de pigments hydrophobés, peuvent être résumées par les considérations exposées ci-dessous.

Ainsi, la granulométrie des globules de l'émulsion anionique de base, convenant au procédé, n'a pas besoin d'être poussée à une trop fine résolution pour être performante. En effet, les développements qui suivent, montrent qu'il peut être plus avantageux de traiter une émulsion dont les globules sphéroïdes de bitume ou autre en suspension ont un diamètre moyen supérieur à 1 µm et avantageusement de l'ordre de 5 µm environ.

Par contre, les poudres sont préférentiellement aussi finement divisées que possible, par exemple à grains d'un diamètre moyen inférieur ou égal à environ 0,2 µm, préférentiellement à environ 0,1 µm.

En partant de ces chiffres, on peut estimer que pour une masse donnée de globules de bitume d'un diamètre de 5 µm, en introduisant le même volume de poudre hydrophobée dont les grains n'ont que 0,1 µm de diamètre, on obtiendrait un nombre 50³ fois supérieur de grains par rapport au nombre de globules de bitume. En n'ajoutant que 1 % de cette poudre par rapport au volume de l'émulsion, il reste un ordre de grandeur de 1000 grains de poudre hydrophobée, chargés avec un maximum de charge électrique positive, par globule de bitume, ce qui est largement suffisant pour effacer la charge négative et entourer d'un manteau de charges électriques positives chacun desdits globules.

Des essais effectués par les inventeurs prouvent en effet que 1 % de blanc d'Espagne, hydrophobe selon la formule: 50 g de poudre sèche + 2,5 g de FeSO₄7H₂O en solution aqueuse de 25 % + 0,5 g d'acide oléique, par rapport au volume d'émulsion, suffit à transformer celle-ci en émulsion fortement active, à capacité d'enrobage universel.

Les hypothèses formulées ci-dessus, soutenues par l'exemple précédent, permettent d'orienter l'élaboration de formulations d'émulsions selon l'invention vers une définition et une détermination adaptées, en jouissant toutefois de larges tolérances.

En ce qui concerne le passage des grains de poudre hydrophobée à travers la phase extérieure aqueuse de l'émulsion et leur répartition uniforme dans l'émulsion, il suffit que, au cours de ou suite à l'introduction de la poudre hydrophobée chargée positivement, l'émulsion soit brassée de manière relativement énergique.

Contrairement aux idées établies actuelles de l'homme du métier, les opérations précitées se passent dans un milieu fortement alcalin, alors que les émulsions cationiques, appelées quelquefois "émulsions acides", sont reconnues pour être performantes en milieu acide seulement.

Ce comportement inattendu pourrait trouver son explication dans le fait que, au cours du procédé selon l'invention, intervient, en plus des phénomènes chimiques, un phénomène physique d'adsorption de micro-grains d'une poudre hydrophobée, ceinturant les globules de bitume ou autre en suspension dans l'émulsion. Que ce phénomène soit possible à un degré d'alcalinité élevé, est un fait nouveau et surprenant et réside dans la possibilité d'introduire des charges électriques positives dans une émulsion anionique, chargée négativement, sans que pour cela l'émulsion ne soit détruite Or une charge positive du bitume ou d'un composé similaire, dans son émulsion correspond à la définition d'une émulsion cationique.

Il convient de noter que plus le reliquat de charge positive, après compensation avec la charge négative du bitume ou de la suspension similaire, est grand, plus grande sera la puissance de rupture adhésive de cette émulsion au contact de supports acides, comme les siliceux par exemple, ce quel que soit le degré d'humidité

Plus remarquable encore est le fait que cette émulsion, qui ne doit rien à la chimie de synthèse de molécules cationiques, soit aussi apte à enrober et à recouvrir (de la mème manière adhésive) des supports, notamment des granulats, basiques, tels que des granulats calcaires par exemple, en réagissant comme une émulsion anionique améliorée.

L'émulsion obtenue dans le cadre du procédé selon l'invention est par conséquent un nouveau type d'émulsion qui n'a plus besoin d'aucune adaptation à la nature minéralogique des supports, notamment des granulats, ni à leurs compositions granulaires. Elle convient même à beaucoup de supports organiques et peut donc être qualifiée de polyvalente.

Ainsi, l'émulsion, notamment du type bitumineux, obtenue par le procédé selon l'invention, consiste en une émulsion cationique stable même en milieu fortement alcalin, comportant des grains de poudre hydrophobes et chargés positivement pouvant enrober des supports basiques ou acides, hydrophobes ou non, ce quel que soit leur degré d'humidité.

Si, à titre d'exemple théorique, en dehors de toute considération d'application pratique, on cherche à enrober des supports hydrophobes avec l'émulsion polyvalente à comportement cationique ci-dessus, on constate que sous l'influence des deux charges électriques de même signe le bitume est expulsé de l'émulsion. Ce bitume devient ainsi un liant hydrocarboné normal qui, au contact des supports hydrophobés, s'y colle adhésivement. Ceci a été confirmé par différents essais effectués par les inventeurs.

On peut considérer que la poudre hydrophobée, introduite dans une émulsion anionique, fait subir à ses globules de bitume une espèce d'hydrophobation, qui les dégagent de toute considération de charges électriques et confèrent une capacité universelle d'enrobage et de recouvrement adhésifs à l'émulsion selon l'invention.

Tout se passe comme si la poudre hydrophobee rétrocédait a l'émulsion sa capacité d'enrobage et transférait sa condition d'hydrophobicité ou d'hydrophobation aux globules d'émulsion.

En outre, il a été constaté que trois paramètres devaient être pris en considération et suivis du fait de leur influence sur l'évolution des enrobés, à savoir:
1) l'intensité ou le potentiel d'hydrophobie de la poudre choisie,
2) le taux de poudre hydrophobée à appliquer à l'émulsion, et,
3) la nature de la poudre choisie.

Ainsi, en prenant l'exemple de la poudre de talc, hydrophobée selon la formule: 100 kg de talc + 2 kg de FeSO₄7H₂O en solution à 25 % + 0,2 kg d'oléine, on obtient une hydrophobie suffisante pour que l'émulsion anionique de base devienne cationique, pour le très faible taux de 0,25 % de talc hydrophobé.

En maintenant constant le potentiel de l'hydrophobicité, obtenue par la formule ci-dessus et en faisant varier son taux dans l'émulsion, on observe une rupture de plus en plus mordante, en augmentant le taux de poudre hydrophobée. Souvent le taux d'alcalinité de l'émulsion doit suivre en hausse, pour que, pendant l'opération de malaxage, il n'y ait pas de rupture prématurée

Comme la rupture est adhésive, pour des taux suffisants d'alcalinité, une formulation moyenne, convenant à tous les cas d'enrobage, est envisageable.

En faisant varier l'intensité de l'hydrophobie ou hydrophobicité, et en maintenant constant le taux de poudre hydrophobée dans l'émulsion, on observe, plus particulièrement pour une émulsion bitumineuse, un comportement semblable à celui d'une émulsion cationique, enrobant adhésivement des granulats acides.

Mais la spécificité de l'émulsion selon l'invention fait qu'elle enrobe et recouvre également adhésivement les minéraux basiques et autres supports, en produisant des enrobés normalement ouvrables et posables. Toutes les nuances de comportement peuvent être imaginées et créées, ce qui permet de s'attaquer à des problèmes précis, comme par exemple la création d'un enrobé à froid, à grains séparés, qui soit posable et cylindrable comme son homologue à chaud, ce qui ne paraissait pas possible à ce jour avec les bitumes visqueux de l'enrobage à chaud.

A partir d'un sable de carrière siliceux 0/2mm, contenant plus de 12 % de fines, on obtient facilement un enrobé à grains séparés, avec une émulsion issue d'un bitume acidifié, mis en émulsion par une eau contenant 0,3 % et plus de NaOH et enrichie d'une poudre de carbonate de calcium très finement broyée (blanc d'Espagne, par exemple), hydrophobée à sec suivant la formule: 100 kg de poudre + 5 kg de solution de sulfate de fer FeSO₄7H₂O + 0,8 kg d'acide oléique. Le sable, à raison d'une tonne mélangée avec 150 kg d'émulsion à 50 à 55 % de bitume, hydrophobée au taux de 1 % de poudre, s'enrobe parfaitement et adhésivement. Il peut y avoir, suivant l'origine du sable, sa composition granulaire etc., une rupture trop rapide, consommée, pour ainsi dire, pendant les opérations d'enrobage. Dans cet état l'enrobé n'est pas cylindrable. Il faut, soit retarder la rupture de l'émulsion, sans mouiller davantage, soit obtenir la rupture dans le malaxeur. Ce dernier point sera abordé plus loin dans le présent mémoire.

Sachant qu'une alcalinité élevée, allant jusqu'à un P_{H} avoisinant 14, n'empêche pas la rupture, mais la ralentit seulement, la perspective d'obtenir un enrobé à grains séparés, posable et cylindrable comme son homologue à chaud, a fait son chemin en ce sens qu'une rupture retardée doit durer le temps de refroidissement pendant lequel un enrobé à chaud reste cylindrable, pour rester également compactable pendant cette période de rupture retardée.

Ceci est réalisable, sans qu'on ait besoin de rendre l'émulsion plus alcaline, en ajoutant aux granulats secs ou peu humides, tournant dans le malaxeur-enrobeur, avant l'ajout de l'émulsion, une certains dose d'alcali sous une forme solide (qui, autrement, aurait dû être introduite dans l'émulsion) comme du carbonate de sodium Na₂CO₃ par exemple. Il en résulte un enrobé à grains séparés, posable par les finisseurs et cylindrable avec les moyens adaptés, connus de l'homme du métier. Néanmoins un long transport le rendrait à nouveau non cylindrable, voire peu maniable. D'où, dans ce cas, la nécessité de fabriquer ces enrobés à proximité des chantiers, ce qui d'ailleurs, du point de vue économique du moins, peut être plus avantageux que de les prendre à poste fixe.

Cette façon de procéder présente toutefois des aléas en rapport avec les intempéries, que la rupture dans le malaxeur éviterait.

En effet, dans l'état actuel de l'enrobage à froid aux émulsions, tout en cherchant la rupture dans le malaxeur, on tourne la difficulté, en travaillant avec des bitumes moins visqueux que ceux de la technique de l'enrobage à chaud, ce qui ne correspond pas à l'un des buts recherchés par l'invention.

Pour que la rupture de l'émulsion soit envisageable dans le malaxeur et que l'ouvrabilité de l'enrobé devienne possible avec les bitumes visqueux de l'enrobage à chaud, un des moyens techniques consiste à donner au bitume la consistance qu'il a sous la forme de son émulsion inverse WO (eau dans huile), qu'il s'agit de provoquer, soit au cours du malaxage réalisant l'enrobage des supports, soit avant, sous une forme d'émulsion bitumineuse WO, qui reste maniable.

L'un des moyens connus consiste à dépasser la dose de stabilisation maximale en alcali de l'émulsion, préférentiellement en ajoutant cet excès sur les granulats tournant dans le malaxeur. Ainsi le bitume devient phase extérieure d'une émulsion WO dont les gouttelettes d'eau émulsionnées dans le bitume rendent ce dernier malléable et de ce fait cylindrable. D'ailleurs une grande partie de cette eau incluse dans le bitume en ressort assez rapidement par synérèse. Le reste sort progressivement au cours d'un processus comparable à la phase de refroidissement de l'enrobé à chaud homologue.

Un autre moyen simple et économique en vue de transformer une émulsion anionique OW (huile dans eau) en une émulsion inverse WO, consiste à introduire du NaCI soit avant ou après l'ajout de l'émulsion sur les supports ou granulats tournant dans le malaxeur en vue de leur enrobage, soit au cours de ce dernier. On obtient ainsi un bitume qui tient l'eau en émulsion, sous une viscosité apparente, inférieure à la réalité, ce qui rend les enrobés ainsi obtenus transportables et cylindrables, jusqu'à ce que sous l'effet de la synérèse, du compactage et de l'évaporation, le bitume soit restitué en sa viscosité originelle et cela sans avoir subi d'altération dommageable.

Ceci est un avantage appréciable par rapport à la surchauffe nocive en enrobage à chaud et de l'emploi de solvants (cut-backs).

Ainsi le bitume aura subi des traitements bénéfiques pour la technique de l'enrobage à froid, sans altération de sa composition originelle, donc de ses qualités intrinsèques.

Comme le restant d'eau s'évacue par séchage naturel sous forme de vapeur, elle peut tout aussi bien avoir tendance à se condenser sur les surfaces revêtues de liant. Mais cela ne peut pas avoir pour effet de le décoller ou de produire son désalvéolement à cause de l'hydrophobation.

Que ce soit en la recherche d'une rupture retardée par une émulsion anionique enrichie d'une poudre hydrophobée ou par son inversion en émulsion WO, les moyens utilisés par l'invention ne sortent pas du cadre d'une chimie simple, non polluante et de l'application des techniques décrites dans les demandes de brevets citées plus haut, traitant d'une technique hydrophobante plus restreinte.

En résumé, le signe de la charge électrique du bitume, ou d'un composé similaire en suspension, d'une émulsion anionique étant négatif, celui de la charge de la poudre hydrophobée positif, il est facile, lors de sa mise en hydrophobie, de doser le potentiel de sa charge électrique pour qu'il soit notablement supérieur, en valeur absolue, à celui du bitume de l'émulsion.

On peut admettre que les deux charges de signes contraires s'attirent et que les grains microscopiques de la poudre hydrophobée sont appelés à rejoindre les globules en suspension de l'émulsion, ce qui entraîne une absorption et un effacement de la charge négative du bitume ou du composé similaire.

Les grains de la poudre hydrophobée forment une armature autour des globules de bitume ou du composé similaire, qui porte une charge positive, reliquat de la somme algébrique des deux charges électriques en présence.

Le phénomène d'adsorption ne détruit pas les émulsions, mais leur confère un autre statut, celui d'une émulsion stable, à effet cationique, en milieu alcalin, possédant des propriétés d'enrobage et de recouvrement universel et polyvalent.

Cette émulsion selon l'invention présente vis-à-vis de granulats de nature quelconque, une réaction favorable d'enrobage à rupture adhésive. Ainsi, cette émulsion, à l'instar des matériaux hydrophobes connus par les brevets précités, ne fait pas non plus de distinction de nature de matériaux et enrobe adhésivement les matériaux basiques et acides.

En outre, grâce au procédé de préparation selon l'invention il est possible d'obtenir un type d'émulsion à pouvoir d'enrobage universel sans faire appel à de nouveaux produits chimiques.

En effet, les poudres très finement divisées, hydrophobées à des potentiels de charge électrique positifs variables, ont été reconnues introductibles dans des émulsions anioniques, sans les casser, créant ainsi un type nouveau d'émulsion qui, d'une manière générale, enrobe adhésivement tous les supports, qu'ils soient chargés d'une électricité positive ou négative.

En effet, l'acte physique que constitue l'introduction de poudre(s) ou de pigments hydrophobes dans une émulsion, permet de faire l'impasse sur toute nouvelle chimie à intervenir pour orienter les effets de la rencontre de charges électriques à l'interface du liant et du support à couvrir.

Par la technique de mise en hydrophobicité de poudres impalpables, introductibles dans des émulsions, telle que décrite dans la présente demande, une manière nouvelle de concevoir des émulsions est présentée, dont l'application systématique dans le domaine général de la technique de la fabrication des émulsions, est devenue possible.

Bien que dans le présent mémoire il est fait référence plus particulièrement à des émulsions bitumineuses pour décrire les caractéristiques, la mise en oeuvre et l'application de l'invention, d'autres domaines d'application et de mise en oeuvre sont envisageables, tels que par exemple les peintures.

Il est en effet connu par: "Chimie et Technologie des Agents Tensio-actifs" de A. M. SCHWARTZ et J. W. PERRY, Dunod 1955, page 490, que dans la préparation des pulpes aqueuses de pigments, ainsi que dans le broyage de ces pigments devant être dispersés dans l'eau, on utilise souvent des agents tensio-actifs, et que les agents dispersants et mouillants, utilisés dans les peintures et les laques, sont généralement insolubles dans l'eau Ils peuvent donc être hydrophobés.

Il est certain qu'en hydrophobant ces pigments de manière à obtenir des grains de pigments sous forme de grains hydrophobes et chargés positivement, le comportement des peintures ou laques, serait modifié, les rendant plus adhésives et universellement couvrantes.

La mise en hydrophobie de tels pigments, obtenus par broyage ne pose pas de problème Les services qu'ils peuvent rendre dans l'opération d'embouage restent à explorer.

Il est également raisonnable de supposer que ces pigments hydrophobés, utilisés comme charges, jouent le même rôle améliorant dans les peintures et les laques, que les poudres hydrophobées dans les émulsions de bitume par exemple (voir ci-dessus), notamment dans l'enrobage de supports non hydrophobés, tels que décrits précédemment.

Non hydrophobés, les pigments font fonction de charges quasi inertes. Hydrophobés, ils activent le mouillage et l'adhésivité des surfaces à revêtir. Leur dynamique, dosable, qu'une adhésivité universelle accompagne - notamment sous leur forme "émulsion" - est susceptible de modifier leur statut de peinture ordinaire en spécialité plus performante.

La présente invention concerne également les enrobés bitumineux pouvant être obtenus au moyen du procédé décrit ci-dessus, en particulier un enrobé à froid obtenu par application de l'émulsion bitumineuse décrite précédemment sur des granulats ou des supports analogues, traités ou non.

En vue de rendre un tel enrobé transportable et cylindrable, on peut avantageusement utiliser une émulsion bitumineuse d'enrobage sous forme d'émulsion inverse du type WO, obtenue avant ou pendant l'enrobage, tel que décrit précédemment.

En variante, l'enrobé obtenu peut être réchauffé avant sa manipulation ou sa mise en oeuvre et être porté à une température d'environ 110°C.

Ainsi un enrobé à l'émulsion selon l'invention, à base d'un bitume visqueux, peut être rendu transportable et cylindrable en le réchauffant à environ 110°C, éventuellement dans le tambour sécheur d'un poste d'enrobage à chaud, sans utiliser ni la tour de reconstitution du squelette granulaire, de pesage et d'enrobage, ni le dépoussiéreur, ces installations n'étant plus nécessaires et pouvant donc être supprimées.

Grâce à l'invention, il est donc possible d'obtenir notamment une émulsion polyvalente d'un nouveau type à comportement cationique et à pouvoir d'enrobage universel, obtenue par l'introduction de grains ou de pigments hydrophobes de très faible granulométrie (très finement divisés) et en faible quantité dans une émulsion anionique, sans modifier sa consistance liquide. On réalise ainsi un transfert des propriétés d'hydrophobicité des supports solides que constituent les grains et pigments précités, vers les globules de l'émulsion en conférant ainsi à cette dernière les qualités mentionnées ci-dessus, la poudre hydrophobée ne constituant qu'un agent de transfert et d'introduction desdites propriétés à ladite émulsion.

L'utilisation des poudres hydrophobées et des émulsions décrites ci-dessus, ou de granulats hydrophobes décrits dans la demande de brevet français 2 686 811, permet également de simplifier de manière importante la structure des installations de production d'enrobés.

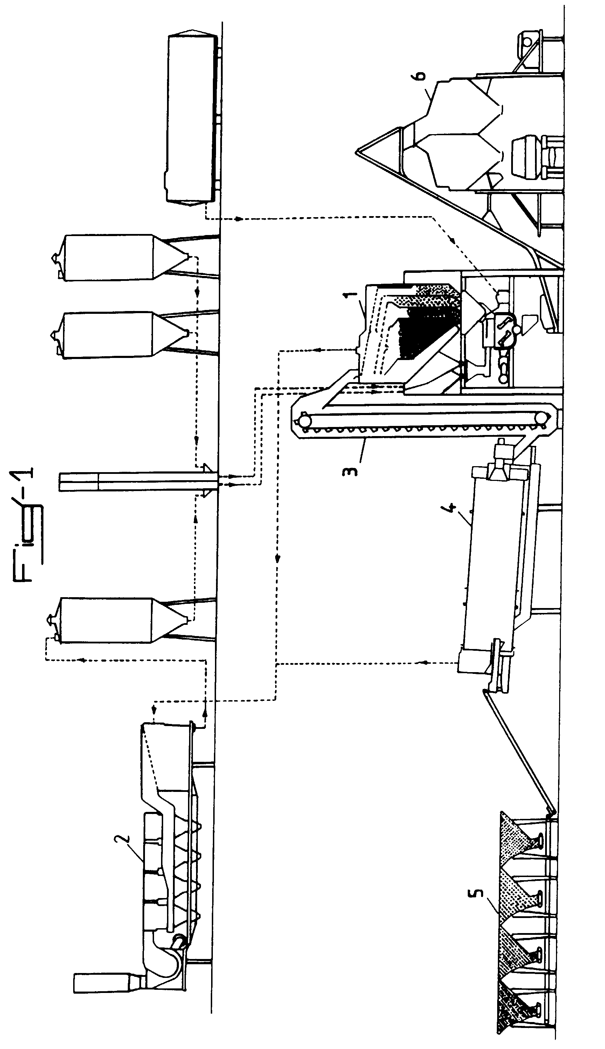

Ainsi, la figure 1 des dessins annexés montre, à titre d'exemple, la constitution classique d'une installation d'enrobage à chaud.

Cette dernière comprend notamment :
- une tour de recriblage 1 avec ses silos, son système de pesage des fractions de granulats ensilées séparément, son installaltion de dosage de bitume chaud, son malaxeur et son système d'évacuation de l'enrobé chaud vers les moyens de transport ou les silos de stockage.
- un complexe de dépoussiérage 2.
- un élévateur 3 des granulats chauds vers les système de tamisage à chaud.
- un tambour sécheur 4.
- des silos doseurs 5 des fractions granulaires à partir des granulats froids de différentes granulométries.
- des silos de stockage 6 de l'enrobé chaud.

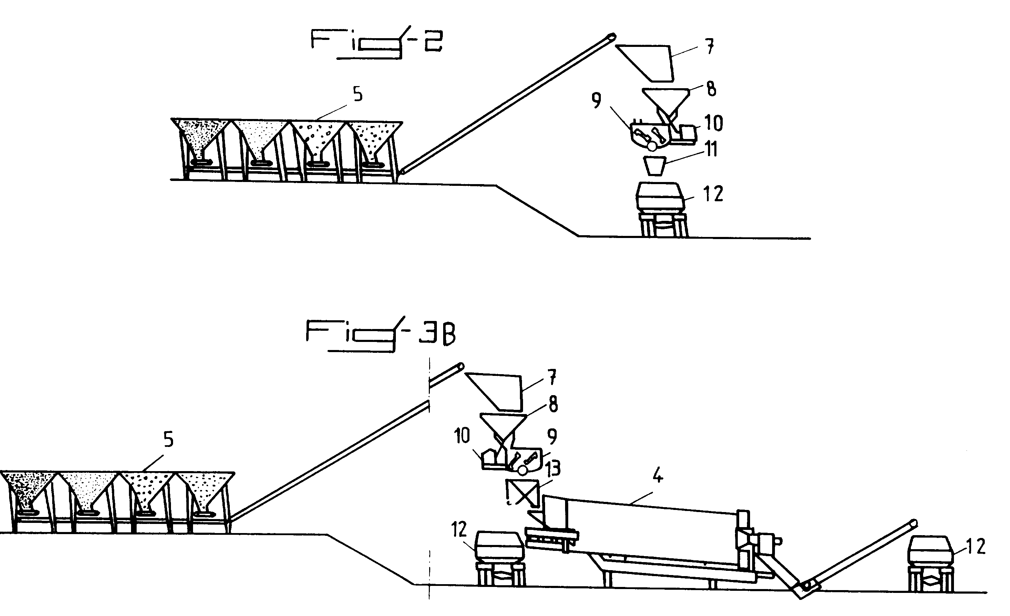

Or, grâce à la technique d'enrobage à froid, utilisant notamment les émulsions précitées, le dispositif de production et de pose d'enrobés bitumineux peut ne plus être constitué que par des silos doseurs 5 contenant les granulats à enrober, hydrophobes ou non et présentant des granulométries différentes, par un silo de stockage temporaire 7 alimenté par les silos doseurs 5 avec un mélange de granulats déterminé en fonction d'une formulation granulaire donnée, par une balance 8 recevant les charges successives du silo 7, par au moins un malaxeur 9 alimenté par la balance 8 et par une pompe doseuse 10 reliée à un récipient de stockage de l'émulsion anionique bitumineuse, mélangée ou non avec une poudre hydrophobée, ce, en fonction de la nature des granulats et/ou de la présence ou non de poudre hydrophobée dans ces derniers, et, par une goulotte de déversement 11 déversant les enrobés dans le contenant d'un moyen de transport 12 (Figure 2).

Ainsi, l'enrobage à froid permet de supprimer la tour de recriblage 1 et ses accessoires, le complexe de dépoussiérage 2, l'élévateur 3, le tambour sécheur 4 et les silos de stockage 6.

Dans le cas où des granulats hydrophobes sont utilisés, le liant fluide pourra être quelconque (Voir à ce sujet la description du dépôt FR 2 686 811).

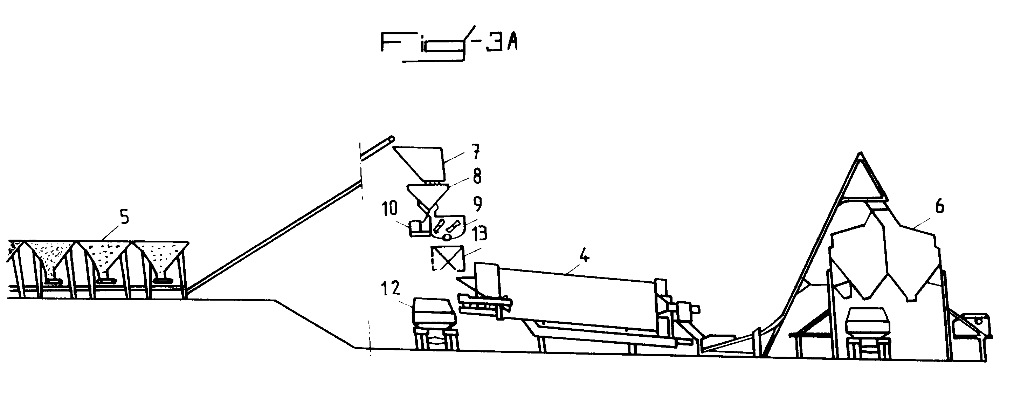

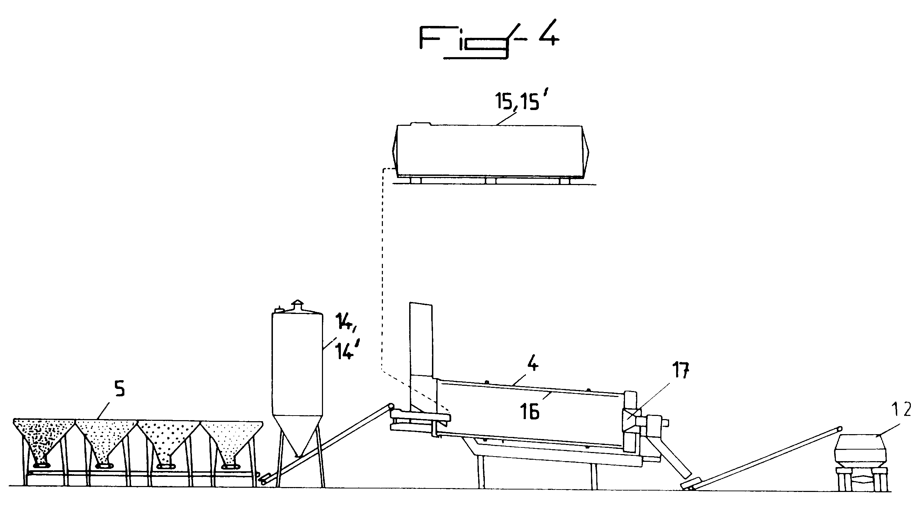

Toutefois, en vue d'offrir la possibilité de produire soit de l'enrobé à froid, soit de l'enrobé à chaud, dans une même installation, l'invention propose un dispositif de production et de pose d'enrobés bitumineux, permettant notamment la mise en oeuvre du procédé d'enrobage précité, comportant des moyens d'alimentation sélective en granulats hydrophobes et non hydrophobés, en émulsion anionique bitumineuse et en émulsion anionique bitumineuse additionnée de poudre hydrophobée, à partir de contenants de stockage 5, 5', 5, 14, 14', 15, 15' correspondants, au moins un moyen de malaxage 4,9 réalisant l'enrobage, suivi de ou combiné avec un moyen de réchauffage 4 des enrobés, et des moyens 13, 6 d'acheminement et de déversement des enrobés, chauffés ou non, dans le contenant d'un moyen de transport 12 (Fig 3, 3A et 4 des dessins annexés).

Dans les variantes de réalisation représentées aux figures 3 et 3A, le dispositif ou l'installation de production et de pose d'enrobés à froid est sensiblement identique à celui de la figure 2 et la fabrication de l'enrobé à froid reste inchangée, exceptée pour la goulotte Il qui devient une goulotte orientable 13. Cette dernière peut prendre, par rotation, les deux positions nécessaires pour débiter l'enrobé à froid, soit directement dans le contenant d'un moyen de transport 12, soit dans un réchauffeur, figuré ici par le tambour sécheur 4 d'un poste d'enrobage à chaud.

Ainsi, l'enrobé à froid est obtenu dans un moyen de malaxage 9 placé en tête du moyen de réchauffage 4, auquel il est relié par une goulotte orientable 13 qui, dans une première position, déverse l'enrobé à froid dans le moyen de réchauffage 4 et, dans une seconde position, déverse l'enrobé à froid dans le contenant d'un moyen de transport 12.

L'enrobé chemine dans le réchauffeur et transite, soit vers un moyen de transport 12, soit dans les silos de stockage 6, les mêmes par exemple que ceux de l'enrobage à chaud.

Ce compromis a le privilège de réunir sur lui les avantages de l'enrobage à froid aux émulsions en captant ceux acquis par la technique presque centenaire de la technique à chaud.

Il est jugé avantageux, aux moins dans un premier temps, de lier l'enrobage à froid intégral (figure 2) à un enrobage à chaud simplifié figures 3 et 3A) pour les raisons suivantes:
a) On évite les limites assez étroites qu'impose une rupture contrôlée qui serait nécessaire pour s'assurer des délais suffisants pour le transport et la mise en oeuvre de l'enrobé.
b) On gagne l'usage, jusqu'à amortissement complet, de tout le matériel de transport et de mise en place qui sert actuellement en enrobage à chaud classique.
c) Les dispositifs des figures 3 et 3A permettent, au choix, de faire de l'enrobé à froid intégral, selon la figure 2, en déconnectant le réchauffeur, ce qui permet, aux heures creuses, des mises au point à part du chaud, selon les figures 3 et 3A.

Ce compromis élève les procédés d'enrobage bitumineux à un degré de généralisation encore jamais atteint.

Le bon usage de l'émulsion précitée selon l'invention permet, en effet, la suppression de toute pollution et met en lumière une simplification spectaculaire du poste d'enrobage à chaud classique, parce que l'enrobé à froid, terminé dans un simple malaxeur, baignant dans son eau de rupture de l'émulsion et dans celle apportée par les granulats de leurs aires de stockage, n'a plus besoin d'être asséchée, mais simplement d'être réchauffée avec l'enrobé, à une température minimum de mise en oeuvre.

De ce fait, en utilisant par exemple comme réchauffeur le tambour sécheur 4 d'un poste d'enrobage à chaud classique (figures 3 et 3A), on n'aura plus de poussière à gérer ni de formule à reconstituer, tout en jouissant du confort des délais de transport et de mise en oeuvre bien connus de l'enrobage à chaud. En plus, il reste le grand avantage de pouvoir utiliser et amortir le parc de transport et de pose des enrobés.

Par voie de conséquence, l'invention a également pour objet tout procédé qui, à partir d'un quelconque enrobé à froid, à base de bitumes visqueux, tels qu'ils sont employés en enrobage à chaud par exemple, permet d'obtenir, par un réchauffage non séchant, un enrobé chaud ouvrable et sa pose aux environs de 100°C.

Un tambour réchauffeur 4 mieux adapté à ce procédé, comporte en lieu et place des dispositifs de brassage habituels, un tube d'usure et d'isolation 16, par exemple en acier et présentant une surface interne lisse, dont le diamètre est légèrement inférieur au diamètre intérieur du tambour sécheur 4.

Le tube 16 est d'un diamètre tel qu'il laisse quelques millimètres de vide entre le tambour proprement dit et ce tube d'usure et d'isolation, ce dernier étant en outre facile à remplacer. Outre une meilleure concentration de la chaleur rayonnante sur le produit à réchauffer, récupérée par ce dispositif isolant, le tambour ne pourra pas s'encrasser et les matériaux en cours de réchauffage glissent vers la sortie, en étant animés d'un mouvement de balancement rythmé qui, à chaque instant, modifie l'orientation de chaque granulat devant la flamme. Ce fait et la présence simultanée d'eau et de bitume, évitent tout effet nuisible de la flamme sur le bitume. Un rideau de protection serait une précaution inutile.

Mais le moyen le plus rationnel de réchauffement consiste en l'emploi de micro-ondes, qui éliminent complètement toute pollution par le CO₂, déjà notablement abaissée par l'invention.

Conformément à un mode de réalisation avantageux de l'invention, aboutissant à une structure plus compacte du dispositif de production, il peut être prévu que les moyens de malaxage et de réchauffement sont regroupés en un unique tambour malaxeur chauffant 4 qui, dans sa partie amont, dans la zone d'admission des granulats et de l'émulsion, réalise l'enrobage avec rupture complète et qui, dans sa partie aval, délivre un enrobé à une température donnée, notamment supérieure à environ 100°C, après réchauffement progressif de l'enrobé au cours de son transfert dans ledit tambour 4 (Figure 4).

Devenu plus compact ce poste ou dispositif d'enrobage est aussi devenu plus performant, mais surtout plus propre et plus économique.

A partir d'un exemple d'enrobage à froid, suivi d'un réchauffement de 100°C, un bilan de l'énergie qu'on aurait à dépenser à cause de la présence d'eau, en comparant avec un enrobage à chaud classique et le nouvel enrobage à chaud devenu possible par l'invention, permet d'apprécier l'économie d'énergie de ce nouveau procédé d'enrobage à chaud.

A cet effet, si l'on admet qu'une tonne de granulats non traités apporte 40 litres d'eau à un enrobage à chaud classique. Pour l'éliminer il faut l'évaporer, ce qui nécessite, en chiffres ronds, 40 x 600 = 24 600 kcal. Pour la même tonne de granulats, enrobés d'abord à froid suivant l'invention, on peut admettre qu'elle apporte 80 litres d'eau au réchauffeur dont l'élévation de température de 100°C consommerait environ 80 x 100 = 8000 kcal, donc seulement le tiers de celle consommée pour l'enrobage à chaud classique.

Cette économie d'énergie appréciable est accompagnée d'une dépollution complète par rapport à la poussière, d'une inhibition de la ségrégation et d'une simplification de l'appareillage ci-dessus évoquée.

De plus, moins de CO₂ est expulsé dans l'environnement.

En outre, par des dispositifs simples placés sur le chemin de transfert de l'enrobé froid vers le réchauffeur, on peut éliminer une grande partie de cette eau, ce qui donne un bilan encore plus favorable.

Cette nouvelle approche de l'enrobage à chaud permet non seulement de rendre cette technique non polluante, mais de simplifier massivement les dispositifs actuels et de conserver le parc d'engins de transport et de chantier qui existe et qui accompagne normalement l'enrobage à chaud classique.

Par ailleurs, ce nouveau procédé d'enrobage peut également être considéré comme étant un perfectionnement des différentes techniques d'enrobage à froid, du fait de la suppression du contrôle délicat de la rupture.

Il y a donc un enrichissement mutuel, à la fois pour la technique de l'enrobage à chaud lorsqu'on lui applique les avantages de l'enrobage à froid et pour l'enrobage dit "à froid" lorsqu'on lui applique les avantages de l'enrobage à chaud.

Conçu par exemple en poste compact mobile, la station ou le dispositif d'enrobage à double effet qui résulte des considérations précédentes, se substitue entièrement au poste d'enrobage à chaud classique actuel, mais peut rendre à l'enrobage à froid cet immense service, de supprimer la phase délicate de la rupture contrôlée de l'enrobé à froid, en le réchauffant.

Jusqu'à ce que les inconvénients qui hypothèquent l'enrobage à froid dans sa phase finale de transport et de pose soient surmontés dans la pratique, on pourrait lui appliquer le réchauffage, selon le procédé d'enrobage précité.

Dès qu'on aura trouvé pour l'enrobage à froid intégral la même sécurisation que donne l'enrobage à chaud, on pourra déconnecter le réchauffeur et faire du froid intégral, sans avoir besoin de changer de poste d'enrobage, qui, en cas de difficultés, peut immédiatement prendre le relais par le chaud.

Il convient également de noter que l'enrobé transitant dans le tube d'isolation et d'usure 16 n'est plus soulevé dans la flamme et avance par un mouvement pendulaire rythmé vers la sortie du tambour 4, non sans que les particules de cet enrobé soient en constant mouvement de retournement et de nettoyage automatique, n'offrant plus de position de repos devant la flamme, ce qui serait susceptible de surchauffer le liant bitumineux.

On obtient ainsi pour l'enrobage à froid, comme pour l'enrobage à chaud, une fabrication en continu qui supprime les appareils de pesée et de mélanges préliminaires figurant sur les figures 2, 3 et 3A.

La figure 4 des dessins annexés représente un exemple d'une de ces dispositions possibles. La formulation granulaire est composée par les silos-doseurs 5 et les silos à filler ordinaire 14, tandis que le silo 14' peut contenir une poudre hydrophobée. Les cuves à émulsion 15 et 15' peuvent contenir, l'une une émulsion anionique simple et l'autre la même émulsion, mais rendue polyvalente par l'introduction d'une poudre hydrophobée. Le tambour malaxeur 4 est muni du tube d'isolation et d'usure 16.

La fabrication de l'enrobé à froid comme celui de l'enrobé à chaud se font en continu, brûleur non allumé pour l'enrobage à froid et brûleur allumé pour l'enrobage à chaud. Dans ce dernier cas le brûleur est réglé pour que la température de sortie de l'enrobé atteigne ou dépasse les 100°C, sans pousser à l'élimination de l'eau par évaporation.

Deux possibilités s'offrent à l'entrepreneur: soit il travaille à l'émulsion anionique simple, issue du bac 15 et avec la poudre hydrophobée qui vient du silo 14', soit à l'émulsion polyvalente issue du bac 15'.

L'enrobage continu à froid est malaxé par le tambour d'où il sort en l'état, soit de rupture retardée, adapté à la distance de transport, de pose et de compactage, soit de rupture complète avec la forme d'émulsion WO.

L'enrobage à chaud se déroule de la même manière, mais brûleur allumé, avec l'avantage que la rupture complète est accélérée par la chaleur, sans qu'on ait besoin de pousser jusqu'à la vaporisation de l'eau.

L'enrobé à chaud peut être chargé directement sur un moyen de transport 12 ou mis en attente dans des silos.

Il est toutefois rappelé que les procédés d'hydrophobation peuvent, d'une autre manière, c'est-à-dire sans recourir au réchauffement, assurer un enrobage à froid intégral performant qui devient pratiquement indépendant des distances de transport.

En effet, n'importe quelle formulation granulaire - aussi filléreuse soit-elle - peut être enrobée par une émulsion anionique surstabilisée ou stabilisée à point, par des alcalis, dont le carbonate de soude Na₂CO₃ est le plus approprié. En stabilisant au maximum pour un taux de poudre hydrophobée donné, la rupture peut être tellement retardée, qu'il faut intervenir par un moyen approprié pour la provoquer. Ce moyen consiste en un produit à ajouter au moment de la pose du coulis ou de l'enrobé. Ainsi des coulis et des enrobés peuvent être transportés à n'importe quelle distance et supporter n'importe quels temps d'attente. Au moment de leur pose, un produit capable de provoquer et de moduler la rupture est ajouté.

Les meilleurs vecteurs de rupture sont les précipitants de l'émulsifiant anionique, ce dernier étant généralement ajouté au bitume par les raffineries pour augmenter l'indice d'acide des bitumes. Le sulfate de magnésium MgSO₄ est avantageusement employé comme sel de rupture. Il a l'avantage de pouvoir être ajouté sous forme de sel ou en solution aqueuse, sans que sa réaction de rupture ne détruise les effets d'hydrophobation qui continuent d'agir en produisant un enrobage adhésif et recouvrant.

Cette faculté de transport à de grandes distances avec possibilité de temps d'attente illimités et le choix du moment de la rupture de l'émulsion, sont des avantages certains par rapport aux possibilités de l'enrobage à chaud qu'on ne peut finalement manipuler que durant un temps de refroidissement limité. Mais en même temps on perd l'avantage de l'utilisation des moyens de transport, de pose, etc.et des matériels de l'enrobage à chaud.

En effet, sous les vibrations lors du transport d'enrobés à froid dont l'émulsion n'est pas rompue, il y a risque d'écoulement de l'émulsion sur la chaussée et par conséquent une modification de la formulation.

De plus, la manipulation de tels enrobés devient salissante. Donc leur pose réclame d'autres appareils que des camions ouverts, des finisseurs, etc. nécessaires pour les enrobés à chaud.

L'entrepreneur qui ne veut faire que l'enrobage à froid intégral, devra soit inverser l'émulsion OW en une émulsion WO, suffisamment stable pour supporter le transport et le transbordement, soit changer de technique et organiser le transport en cuves rotatives, à l'instar du transport des bétons de ciment.

Ce dernier moyen de transport résout le mieux ces problèmes et permet de conserver complètement l'avantage d'une fabrication d'enrobés non liée à une distance de transport et avec des temps d'attente illimités, en conservant l'avantage de la décision du moment de rupture de l'émulsion.

Ces transporteurs peuvent déverser directement leur contenu sur l'aire à revêtir, soit sous forme de coulis ou d'enrobés, ces derniers étant profilés et compactés comme les bétons de ciment. Le moyen de rupture est introduit dans la coulée de l'enrobé sur la rampe de déchargement de la cuve ou bien - notamment en ce qui concerne les coulis - répandu sur les aires à couvrir, juste avant la pose.

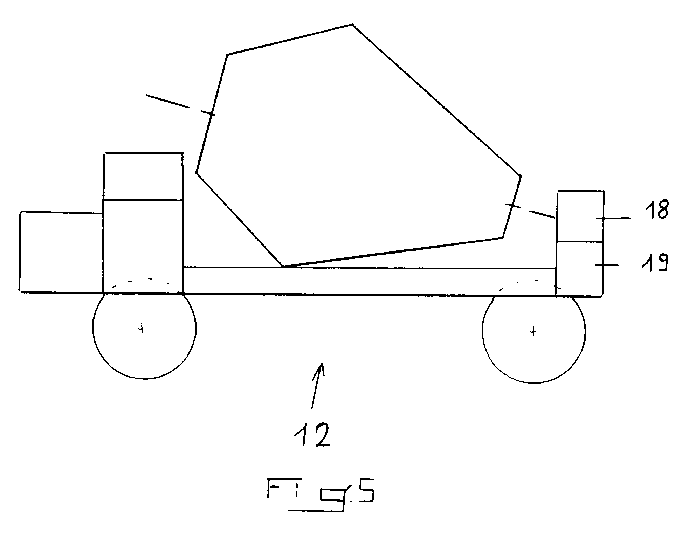

Conformément à une caractéristique supplémentaire de l'invention, représenté à la figure 5 des dessins annexés, le moyen de transport 12 est pourvu d'une unité de déversement et d'épandage à portée réglable comprenant une pompe à béton 18, cette dernière étant asservie à un appareil de projection 19 du vecteur de rupture et d'adhésivité, qui assure à tout moment un débit proportionnel à celui de la pompe à béton. Le débit de l'appareil de projection du vecteur de rupture et d'adhésion est avantageusement réglable en vue d'une vitesse de rupture modulable par la variation du rapport de ces débits, cet asservissement, électroniquement contrôlé, assurant également, qu'à chaque commencement de débit de la pompe à béton, l'appareil de projection du vecteur de rupture et d'adhésion ait débité un jet inutile sur le sol.

Parmi les vecteurs de rupture, donnés en exemples dans les dépôts de brevets précités, on distingue préférentiellement le sulfate de magnésium MgSO₄ qui forme un sel insoluble avec l'émulsifiant anionique jusqu'à agir en agent d'inversion de l'émulsion.

Le sulfite de sodium Na₂SO₃ alcalin, par exemple, est non précipitant pour l'émulsifiant anionique. Il permet de provoquer et de moduler la rupture d'une autre manière efficace.

Les risques d'engorgement de la pompe 14 sont évités du fait que le vecteur de rupture est pulvérisé sur la coulée de l'enrobé seulement après sa sortie du tuyau de refoulement de la pompe 14 sur l'aire à revêtir où il sera profilé, donc remué, suivant les procédés en usage pour les bétons de ciment.

Cet asservissement est assorti de la condition, électroniquement réalisée, que la pompe à béton 18 ne pourra commencer à débiter que lorsque la pompe 19 aura projeté son premier jet inutile sur le sol. De cette manière on a l'assurance que le vecteur de rupture aura saisi toute la masse de l'enrobé

Pour donner une idée de l'ordre de grandeur des débits en cas d'utilisation de sulfate de magnésium MgSO₄ comme vecteur de rupture, sous forme de sa solution aqueuse à 25% par exemple, la quantité nécessaire pour une rupture rapide à très rapide, est de l'ordre de 0,4% par rapport au poids de l'enrobé. Pour une pose de 100 tonnes d'enrobés, il faut donc environ 300 litres de cette solution qui sera finement pulvérisée.

La vitesse de rupture peut être modulée par la variation du débit de la solution de MgSO₄ au moyen d'un robinet taré monté sur la conduite de refoulement de la pompe 19, à portée de la main de l'opérateur.

Pour les coulis et les revêtements minces l'épandage du vecteur de rupture sur les surfaces à revêtir, juste avant l'épandage, est une possibilité qui peut rendre des services.

Nous avons observé que le mélange d'une solution aqueuse de sulfate de magnésium MgSO₄ avec une poudre hydrophobée donne lieu à un liquide laiteux assez homogène qui ne décante que lentement, ce qui n'est pas le cas d'un mélange de sulfite de sodium Na₂SO₃ avec une poudre hydrophobée. Dans ce dernier cas les produits ne s'acceptent pas et restent nettement séparés.

L'observation de l'évolution d'un enrobé produit avec une émulsion anionique surstabilisée aux alcalis dont la rupture, sans l'intervention d'un vecteur spécial n'aurait jamais lieu, fait penser que le vecteur de rupture MgSO₄, associé à une poudre hydrophobée, sous forme d'un liquide laiteux, serait capable d'apporter à l'enrobé à la fois adhésion, recouvrement et rupture simultanément, avec modulations possibles, par l'addition à taux variable de cette combinaison MgSO₄/poudre hydrophobée à l'enrobé au moment de sa pose.

C'est ce que les essais de laboratoire confirment comme possible et avantageux.

Un bon rapport de mélange MgSO₄ solution 25%/poudre hydrophobée est de 10:1. Ici encore toutes les modulations sont possibles, et il est possible de travailler uniquement avec l'émulsion anionique la plus simple, surstabilisée aux alcalis et la combinaison MgSO₄/poudre hydrophobée en solution aqueuse ou sous forme solide.

C'est une généralisation plus souple, allant encore plus loin en efficacité que procure l'émulsion polyvalente et qui représente une bonne solution pour les enrobés mis en place à l'aide de pompes à béton.

Ainsi l'entrepreneur reste complètement maître de l'avancement de ses chantiers puisque la pose de l'enrobé et la rupture de l'émulsion peuvent attendre son bon vouloir, ce qui est un avantage considérable sur l'enrobé à chaud qui subit un refroidissement progressif qui limite son emploi.

Bien entendu, l'invention n'est pas limitée aux modes de réalisation décrits. Des modifications restent possibles, notamment du point de vue de la constitution des divers éléments, ou par substitution d'équivalents techniques, sans sortir pour autant du domaine de protection de l'invention, tel que défini par les revendications.

## Revendications

1. Procédé d'enrobage bitumineux de supports quelconques, caractérisé en ce qu'il consiste à obtenir préalablement une poudre finement divisée hydrophobe et de charge électrique positive, puis à introduire cette poudre, soit dans la masse des supports, notamment granulats, à enrober, soit dans l'émulsion anionique bitumineuse destinée à l'enrobage, à mélanger ensuite les granulats et l'émulsion bitumineuse dans un malaxeur ou analogue en vue de réaliser un enrobage à froid des supports par l'émulsion, avec une rupture adhésive, complète ou non, obtenue dans les malaxeurs ou analogues, et enfin, à réchauffer les enrobés obtenus, par exemple dans un réchauffeur, à une température suffisante permettant leur transport et leur pose à environ 100° C, sans chercher à évaporer l'eau.

2. Procédé d'enrobage bitumineux selon la revendication 1, caractérisé en ce qu'il consiste à obtenir la poudre hydrophobe chargée par l'action concomitante d'un sel métallique soluble dans l'eau et d'un acide organique à chaîne longue.

3. Procédé d'enrobage bitumineux selon la revendication 2, caractérisé en ce que le sel métallique consiste en un sel ferreux ou un sel acide métallique, en solution aqueuse, l'acide organique pouvant consister en un acide gras.

4. Procédé d'enrobage bitumineux selon la revendication 1, caractérisé en ce qu'il consiste à mélanger une émulsion anionique avec une poudre minérale ou organique hydrophobée de charge électrique positive et très finement divisée, de manière à conférer à ladite émulsion un comportement cationique et des propriétés d'enrobage et de recouvrement universelles.

5. Procédé d'enrobage bitumineux selon l'une quelconque des revendications 1 à 4, caractérisé en ce que, dans le cas d'un enrobage à l'aide d'émulsions anioniques surstabilisés, la rupture, l'adhésion et le recouvrement sont réglés, de manière modulable, par un mélange de poudre hydrophobée et d'un vecteur de rupture, ce mélange pouvant être joint à l'enrobé au moment de sa pose, soit sous forme de suspension aqueuse, notamment colloïdale, soit sous forme de poudre solide, composée du mélange de la poudre hydrophobée et du vecteur de rupture sous forme de son sel.

6. Procédé d'enrobage bitumineux selon l'une quelconque des revendications 1 à 5, caractérisé en ce que le diamètre moyen des grains de la poudre hydrophobée est au moins environ 10 fois inférieur à celui des globules en suspension dans l'émulsion.

7. Procédé d'enrobage bitumineux selon l'une quelconque des revendications 1 à 6, caractérisé en ce que les globules de bitume de l'émulsion, de configurations sphéroïdales, présentent un diamètre moyen supérieur à 1 µm, avantageusement de l'ordre de 5 µm environ, et en ce que les grains de la poudre hydrophobée présentent un diamètre moyen inférieur ou égal à environ 0,2 µm. préférentiellement à environ 0,1 µm.

8. Procédé d'enrobage bitumineux selon l'une quelconque des revendications 1 à 7, caractérisé en ce que le milieu alcalin de l'émulsion est porté à un niveau stabilisant tel que la poudre hydrophobée, dosée de manière juste suffisante, ne parvienne pas à déclencher une rupture sensible de ladite émulsion, et en ce qu'une substance entraînant la rupture de l'émulsion est adjointe à l'enrobé au moment de la pose de ce dernier, ladite rupture pouvant intervenir, par exemple, par précipitation de l'émulsifiant anionique par le sulfate de magnésium ou une substance analogue.

9. Procédé d'enrobage bitumineux selon l'une quelconque des revendications 1 et 2, caractérisé en ce qu'il consiste à introduire dans l'émulsion anionique finie ou en cours de fabrication la poudre minérale ou organique hydrophobée de charge électrique positive et très finement divisée, en quantité au moins suffisante pour conférer à ladite émulsion un comportement cationique et des propriétés d'enrobage polyvalentes.

10. Procédé d'enrobage bitumineux selon la revendication 9, caractérisé en ce que au cours de ou suite à l'introduction de la poudre hydrophobée chargée positivement, l'émulsion est brassée de manière relativement énergique.

11. Procédé d'enrobage bitumineux selon l'une quelconque des revendications 9 et 10, caractérisé en ce que l'émulsion se présente initialement sous la forme d'une émulsion anionique stabilisée au moyen d'un ou de plusieurs alcalis, l'émulsion finale obtenue, après intégration de la poudre hydrophobée chargée positivement, étant une émulsion à effet cationique, restant opérationnelle et stable en milieu fortement alcalin.

12. Procédé d'enrobage bitumineux selon l'une quelconque des revendications 9 à 11, caractérisé en ce que l'émulsion consiste en une émulsion bitumineuse du type OW transformée, préalablement à l'enrobage des supports ou au cours dudit enrobage, en une émulsion bitumineuse du type WO, par exemple par l'introduction de NaCI ou d'un produit similaire présentant des capacités d'inversion.

13. Enrobé bitumineux, caractérisé en ce qu'il est obtenu par la mise en oeuvre du procédé d'enrobage selon l'une quelconque des revendications 1 à 12.

14. Dispositif de production et de pose d'enrobés bitumineux, permettant la mise en oeuvre du procédé d'enrobage selon l'une quelconque des revendications 1 à 12, caractérisé en ce qu'il comporte des moyens d'alimentation sélective en granulats hydrophobes et non hydrophobes, en émulsion anionique bitumineuse et en émulsion anionique bitumineuse additionnée de poudre hydrophobée, à partir de contenants de stockage (5, 5', 5, 14, 14', 15, 15') correspondants au moins un moyen de malaxage (4;9) réalisant l'enrobage à froid, suivi de ou combiné avec un moyen de réchauffage (4) des enrobés, et des moyens (13; 6) d'acheminement et de déversement des enrobés, chauffés ou non, dans le contenant d'un moyen de transport (12).

15. Dispositif selon la revendication 14, caractérisé en ce que le moyen de réchauffage (4) est constitué par le tambour sécheur d'un poste d'enrobage à chaud classique.

16. Dispositif selon la revendication 15, caractérisé en ce que le tambour sécheur (4) comporte, en lieu et place des dispositifs de brassage habituels, un tube d'usure et d'isolation (16), par exemple en acier et présentant une surface interne lisse, dont le diamètre est légèrement inférieur au diamètre intérieur du tambour sécheur (4).

17. Dispositif selon l'une des revendications 14 à 16, caractérisé en ce que le réchauffage est réalisé par micro-ondes.

18. Dispositif selon l'une quelconque des revendications 14 à 16, caractérisé en ce que les moyens de malaxage et de réchauffement sont regroupés en un unique tambour malaxeur chauffant (4) qui, dans sa partie amont, dans la zone d'admission des granulats et de l'émulsion, réalise l'enrobage avec rupture complète et qui, dans sa partie aval, délivre un enrobé présentant une température donnée, notamment supérieure à environ 100°C, après réchauffement progressif de l'enrobé au cours de son transfert dans ledit tambour (4).

19. Dispositif selon l'une quelconque des revendications 14 à 17, caractérisé en ce que l'enrobé à froid est obtenu dans un moyen de malaxage (9) placé en tête du moyen de réchauffage (4), auquel il est relié par une goulotte orientable (13) qui, dans une première position, déverse l'enrobé à froid dans le moyen de réchauffage (4) et, dans une seconde position, déverse l'enrobé à froid dans le contenant d'un moyen de transport (12).

20. Dispositif selon l'une quelconque des revendications 14 à 19, caractérisé en ce que le moven de transport (12) est pourvu d'une unité de déversement et d'épandage à portée réglable, comprenant une pompe à béton (18), cette dernière étant asservie à un appareil de projection (19)du vecteur de rupture et d'adhésivité, qui assure à tout moment un débit proportionnel à celui de la pompe à béton, le débit de l'appareil de projection du vecteur de rupture et d'adhésion étant réglable en vue d'une vitesse de rupture modulable par la variation du rapport de ces débits, cet asservissement, électroniquement contrôlé, assurant également, qu'à chaque commencement de débit de la pompe à béton, l'appareil de projection du vecteur de rupture et d'adhésion ait débité un jet inutile sur le sol.

## Patentansprüche

1. Verfahren zur Beschichtung mit Bitumen von beliebigen Trägermaterialien, dadurch gekennzeichnet, daß es darin besteht, zunächst ein feinverteiltes hydrophobes Pulver mit positiver elektrischer Ladung zu erhalten, dann dieses Pulver entweder in die Masse der zu beschichtenden Trägermaterialien, insbesondere Granulate, oder in die anionische Bitumenemulsion, die zur Beschichtung vorgesehen ist, einzuführen, anschließend die Granulate und die Bitumenemulsion in einer Mischmaschine oder einem Analogen zu vermischen, mit dem Ziel, eine Kaltbeschichtung der Trägermaterialien mit der Emulsion mit einem vollständigen oder nicht vollständigen adhäsiven Brechen durchzuführen, der in den Mischmaschinen oder Analogen erhalten wird, und schließlich das erhaltene Mischgut beispielsweise in einer Etwärmungseinrichtung auf eine ausreichende Temperatur zu erwärmen, die seinen Transport und seine Verlegung bei ungefähr 100°C gestattet, ohne zu versuchen, das Wasser zu verdampfen.

2. Verfahren zur Beschichtung mit Bitumen nach Anspruch 1, dadurch gekennzeichnet, daß es darin besteht, das geladene hydrophobe Pulver durch die gleichzeitige Wirkung eines wasserlöslichen Metallsalzes und einer langkettigen organischen Säure zu erhalten.

3. Verfahren zur Beschichtung mit Bitumen nach Anspruch 2, dadurch gekennzeichnet, daß das Metallsalz aus einem Eisen(II)-Salz oder einem sauren Metallsalz in wässeriger Lösung besteht, wobei die organische Säure aus einer Fettsäure bestehen kann.

4. Verfahren zur Beschichtung mit Bitumen nach Anspruch 1, dadurch gekennzeichnet, daß es darin besteht, eine anionische Emulsion mit einem mineralischen oder organischen, hydrophobierten, sehr feinverteillen Pulver mit positiver elektrischer Ladung derart zu vermischen, daß der Emulsion ein kationisches Verhalten und universelle Beschichtungs- und Bedeckungseigenschaften verliehen werden.

5. Verfahren zur Beschichtung mit Bitumen nach einem der Ansprüche 1 bis 4, dadurch gekennzeichnet, daß im Fall einer Beschichtung mit Hilfe von überstabilisierten anionischen Emulsionen, das Brechen, die Adhäsion und die Bedeckung durch ein Gemisch aus einem hydrophobierten Pulver mit einem Bruchüberträger variierbar reguliert werden, wobei dieses Gemisch zu dem Mischgut zum Zeitpunkt seiner Verlegung entweder in Form einer wässerigen, insbesondere kolloidalen Suspension oder in Form eines festen Pulvers, das aus dem Gemisch des hydrophobierten Pulvers und des Bruchüberträgers in Form seines Salzes besteht, hinzugefügt werden kann.

6. Verfahren zur Beschichtung mit Bitumen nach einem der Ansprüche 1 bis 5, dadurch gekennzeichnet, daß der mittlere Durchmesser der Körnchen des hydrophobierten Pulvers mindestens ungefähr 10mal geringer ist als jener der Kügelchen in Suspension in der Emulsion.

7. Verfahren zur Beschichtung mit Bitumen nach einem der Ansprüche 1 bis 6, dadurch gekennzeichnet, daß die Bitumenkügelchen der Emulsion mit rundlichen Formen einen mittleren Durchmesser oberhalb 1 µm, vorteilhafterweise in der Größenordnung von ungefähr 5 µm aufweisen, und daß die Körnchen des hydrophobierten Pulvers einen mittleren Durchmesser unterhalb oder gleich ungefähr 0,2 µm, vorzugsweise ungefähr 0,1 µm aufweisen.

8. Verfahren zur Beschichtung mit Bitumen nach einem der Ansprüche 1 bis 7, dadurch gekennzeichnet, daß die alkalische Umgebung der Emulsion auf ein stabilisierendes Niveau gebracht wird, so daß das hydrophobierte Pulver, das gerade ausreichend dosiert ist, nicht dazu kommt, ein merkliches Brechen der Emulsion auszulösen und daß eine Substanz, die zum Brechen der Emulsion führt, zu dem Mischgut im Moment der Verlegung dieses letzteren hinzugefügt wird, wobei das Brechen beispielsweise durch Fällung des anionischen Emulgators durch Magnesiumsulfat oder eine analoge Substanz stattfinden kann.

9. Verfahren zur Beschichtung mit Bitumen nach einem der Ansprüche 1 und 2, dadurch gekennzeichnet, daß es darin besteht, in die fertige anionische Emulsion oder im Verlauf von deren Herstellung das mineralische oder organische, hydrophobierte, sehr feinverteilte Pulver mit positiver elektrischer Ladung in einer Menge, die mindestens ausreicht, um der Emulsion ein kationisches Verhalten und vielseitige Beschichtungseigetischaften zu verleihen, einzuführen.

10. Verfahren zur Beschichtung mit Bitumen nach Anspruch 9, dadurch gekennzeichnet, daß im Verlauf der oder im Anschluß an die Einführung des hydrophobierten, positiv geladenen Pulvers die Emulsion relativ kräftig durchgerührt wird.

11. Verfahren zur Beschichtung mit Bitumen nach einem der Ansprüche 9 und 10, dadurch gekennzeichnet, daß die Emulsion anfänglich in Form einer anionischen, mittels eines oder mehreren Alkalien stabilisierten Emulsion vorliegt, wobei die letztliche erhaltene Emulsion nach der Integration des positiv geladenen, hydrophobierten Pulvers eine Emulsion mit kationischer Wirkung ist, die in einer stark alkalischen Umgebung einsatzbereit und stabil bleibt.

12. Verfahren zur Beschichtung mit Bitumen nach einem der Ansprüche 9 bis 11, dadurch gekennzeichnet, daß die Emulsion aus einer Bitumenemulsion des Typs OW besteht, die vor der Beschichtung der Trägermaterialien oder im Verlauf der Beschichtung in eine Bitumenemulsion des Typs WO, beispielsweise durch die Einführung von NaCI oder eines ähnlichen Produkts, das Umwandlungsfähigkeiten aufweist, überführt wird.

13. Bitumenmischgut, dadurch gekennzeichnet, daß es durch die Ausführung des Beschichtungsverfahrens nach einem der Ansprüche 1 bis 12 erhalten wird.

14. Vorrichtung zur Herstellung und zur Verlegung von Bitumenmischgut, die die Ausführung des Beschichtungsverfahrens nach einem der Ansprüche 1 bis 12 ermöglicht, dadurch gekennzeichnet, daß sie Mittel zur selektiven Zufuhr von hydrophobierten und nicht hydrophobierten Granulaten, einer anionischen Bitumenemulsion und einer anionischen Bitumenemulsion unter Zugabe eines hydrophobierten Pulvers aus entsprechenden Lagerbehältern (5, 5'; 5, 14, 14', 15, 15'), mindestens ein Mischmittel (4; 9), das die Kaltbeschichtung ausführt, gefolgt von oder kombiniert mit einem Erwärmungsmittel (4) für das Mischgut, und Mittel (13; 6) zur Beförderung und Ausschüttung des Mischguts, das erhitzt ist oder nicht, in das Behältnis eines Transportmittels (12) umfaßt.

15. Vorrichtung nach Anspruch 14, dadurch gekennzeichnet, daß das Erwärmungsmittel (4) aus dem Trommeltrockner einer herkömmlichen Straßenbelag-Warmmischanlage besteht.

16. Vorrichtung nach Anspruch 15, dadurch gekennzeichnet, daß der Trommeltrockner (4) anstelle der gewöhnlichen Mischvomchtungen ein Schutz- und Isolationsrohr (16), beispielsweise aus Stahl, umfaßt, welches eine glatte innere Oberfläche aufweist, dessen Durchmesser geringfügig kleiner ist als der Innendurchmesser des Trommeltrockners (4).

17. Vorrichtung nach einem der Ansprüche 14 bis 16, dadurch gekennzeichnet, daß die Erwärmung durch Mikrowellen durchgeführt wird.

18. Vorrichtung nach einem der Ansprüche 14 bis 16, dadurch gekennzeichnet, daß die Misch- und Erwärmungsmittel in einer einzigen heizenden Mischtrommel (4) kombiniert sind, die in ihrem Teil stromaufwärts in der Einlaßzone der Granulate und der Emulsion die Beschichtung mit vollständigem Brechen durchführt, und die in ihrem Teil stromabwärts ein Mischgut liefert, das nach fortschreitender Erwärmung des Mischguts im Verlauf seines Transports in der Trommel (4) eine gegebene Temperatur, insbesondere oberhalb von ungefähr 100°C aufweist.

19. Vorrichtung nach einem der Ansprüche 14 bis 17, dadurch gekennzeichnet, daß das Kaltmischgut in einem Mischmittel (9) erhalten wird, das am Kopf des Erwärmungsmittels (4) angeordnet ist, mit dem es durch eine Schwenkbare Übergaberutsche (13) verbunden ist, die in einer ersten Position das Kaltmischgut in das Erwärmungsmittel (4) ausschüttet und in einer zweiten Position das Kaltmischgut in den Behälter eines Transportmittels (12) ausschüttet.

20. Vorrichtung nach einem der Ansprüche 14 bis 19, dadurch gekennzeichnet, daß das Transportmittel (12) mit einer Schwenk- und Ausschüttungseinheit mit regelbarer Öffnung ausgestattet ist, welche eine Betonpumpe (18) urnfaßt, wobei diese letztere an eine Auswurfmaschine (19) des Bruch- und Adhäsionsüberträgers gebunden ist, die jederzeit eine Förderleistung, die zu jener der Betonpumpe proportional ist, gewährleistet, wobei die Förderleistung der Auswurfmaschine des Bruch- und Adhäsionsübenrägers im Hinblick auf eine durch die Änderung des Verhältnisses dieser Förderleistungen variierbare Bruchgeschwindigkeit regulierbar ist, wobei diese elektronisch gesteuerte Regelung ebenfalls gewährleistet, daß bei jedem Beginn eines Auswurfs der Betonpumpe die Auswurfmaschine des Bruch- und Adhäsionsüberträgers einen unnützen Strahl auf den Boden abgegeben hätte.

## Claims

1. Process for the bituminous coating of carriers of any kind, characterized in that it consists in obtaining beforehand a finely divided hydrophobic powder with a positive electric charge, in then introducing this powder either into the body of the carriers, in particular aggregates, to be coated or into the anionic bituminous emulsion intended for the coating, in subsequently mixing the aggregates and the bituminous emulsion in a mixer or the like, for the purpose of carrying out cold coating of the carriers by the emulsion, with complete or incomplete adhesive breaking obtained in the mixers or the like, and finally in preheating the mixes obtained, for example in a preheater, to a temperature sufficient to allow them to be transported and to be laid at approximately 100°C, without seeking to evaporate the water.

2. Bituminous coating process according to Claim 1, characterized in that it consists in obtaining the charged hydrophobic powder by the concomitant action of a water-soluble metal salt and of a long-chain organic acid.

3. Bituminous coating process according to Claim 2, characterized in that the metal salt comprises a ferrous salt or a metal acid salt in aqueous solution, it being possible for the organic acid to comprise a fatty acid.

4. Bituminous coating process according to Claim 1, characterized in that it consists in mixing an anionic emulsion with a very finely divided hydrophobic inorganic or organic powder with a positive electric charge, so as to confer, on the said emulsion, cationic behaviour and versatile coating and covering properties.

5. Bituminous coating process according to any one of Claims 1 to 4, characterized in that, in the case of coating using overstabilized anionic emulsions, the breaking, the adhesion and the covering are regulated, in an adjustable way, by a mixture of hydrophobic powder and of a breaking agent, it being possible for this mixture to be added to the mix at the time when it is laid, either in the form of an aqueous suspension, in particular a colloidal suspension, or in the form of a solid powder composed of the mixture of the hydrophobic powder and of the breaking agent in the form of its salt.

6. Bituminous coating process according to any one of Claims 1 to 5, characterized in that the mean diameter of the grains of the hydrophobic powder is at least approximately 10 times less than that of the globules suspended in the emulsion.

7. Bituminous coating process according to any one of Claims 1 to 6, characterized in that the bitumen globules of the emulsion, with spheroidal configurations, exhibit a mean diameter of greater than 1 µm, advantageously of the order of approximately 5 µm, and in that the grains of the hydrophobic powder exhibit a mean diameter of less than or equal to 0.2 µm, preferably approximately 0.1 µm.

8. Bituminous coating process according to any one of Claims 1 to 7, characterized in that the alkaline medium of the emulsion is brought to a stabilizing level, such that the hydrophobic powder, present in a just sufficient proportion, does not succeed in triggering substantial breaking of the said emulsion, and in that a substance bringing about breaking of the emulsion is added to the mix at the time when the latter is laid, it being possible for the said breaking to take place, for example, by precipitation of the anionic emulsifier by magnesium sulphate or an analogous substance.

9. Bituminous coating process according to either one of Claims 1 and 2, characterized in that it consists in introducing, into the finished anionic emulsion or during the manufacture of the anionic emulsion, the very finely divided hydrophobic inorganic or organic powder with a positive electric charge in an amount at least sufficient to confer cationic behaviour and versatile coating properties on the said emulsion.

10. Bituminous coating process according to Claim 9, characterized in that, during or following the introduction of the positively charged hydrophobic powder, the emulsion is stirred in a relatively energetic way.

11. Bituminous coating process according to either one of Claims 9 and 10, characterized in that the emulsion is initially provided in the form of an anionic emulsion stabilized by means of one or more alkalis, the final emulsion obtained, after incorporation of the positively charged hydrophobic powder, being an emulsion with a cationic effect which remains operational and stable in strongly alkaline medium.

12. Bituminous coating process according to any one of Claims 9 to 11, characterized in that the emulsion comprises a bituminous emulsion of the OW type converted, prior to the coating of the carriers or during the said coating, into a bituminous emulsion of the WO type, for example by the introduction of NaCl or of a similar product exhibiting inversion capabilities.

13. Bituminous mix, characterized in that it is obtained by the implementation of the coating process according to any one of Claims 1 to 12.

14. Device for the production and laying of bituminous mixes which makes possible the implementation of the coating process according to any one of Claims 1 to 12, characterized in that it comprises means for selective feeding, from corresponding storage containers (5, 5'; 5, 14, 14', 15, 15'), with hydrophobic and non-hydrophobic aggregates, with anionic bituminous emulsion and with anionic bituminous emulsion to which hydrophobic powder has been added, at least one mixing means (4; 9) carrying out the cold coating, followed by or combined with a means for preheating (4) the mixes, and means (13; 6) whereby the mixes, heated or otherwise, are conveyed to and poured into the container of a transportation means (12).

15. Device according to Claim 14, characterized in that the preheating means (4) is composed of the drum-type dryer of a conventional hot-mix plant.

16. Device according to Claim 15, characterized in that the drum-type dryer (4) comprises, instead of the usual mixing devices, a pipe for attrition and insulation (16), for example made of steel and exhibiting a smooth inner surface, the diameter of which is slightly less than the internal diameter of the drum-type dryer (4).

17. Device according to one of Claims 14 to 16, characterized in that the preheating is carried out with microwaves.

18. Device according to any one of Claims 14 to 16, characterized in that the mixing and preheating means are combined in a single heating mixing drum (4) which, in its upstream part, in the region for admittance of the aggregates and of the emulsion, carries out the coating with complete breaking and which, in its downstream part, delivers a mix exhibiting a given temperature, in particular greater than approximately 100°C, after gradual preheating of the mix during its transfer in the said drum (4).

19. Device according to any one of Claims 14 to 17, characterized in that the cold mix is obtained in a mixing means (9) placed at the head of the preheating means (4), to which it is connected via a swivelling chute (13) which, in a first position, pours the cold mix into the preheating means (4) and, in a second position, pours the cold mix into the container of a transportation means (12).

20. Device according to any one of Claims 14 to 19, characterized in that the transportation means (12) is provided with a unit for pouring and spreading with an adjustable reach comprising a concrete pump (18), the latter being under the control of a device for spraying (19) the breaking and adhesiveness agent which provides, at any time, a flow rate proportional to that of the concrete pump, the flow rate of the device for spraying the breaking and adhesion agent being able to be regulated for the purpose of a breaking rate which can be adjusted by the variation in the ratio of these flow rates, this electronically controlled automatic control also ensuring that, every time discharge from the concrete pump is begun, the device for spraying the breaking and adhesion agent is spared a pointless spurt onto the ground.
